Europäisches Patentamt

European Patent Office

Office européen des brevets

(19)

(11) Publication number: **0 110 201**
**A2**

(12) # EUROPEAN PATENT APPLICATION

(21) Application number: **83111108.3**

(51) Int. Cl.³: **G 01 J 3/10**

(22) Date of filing: **07.11.83**

(30) Priority: **25.11.82 HU 379182**

(43) Date of publication of application: **13.06.84**
**Bulletin 84/24**

(84) Designated Contracting States: **AT DE FR GB IT SE**

(71) Applicant: **KÖZPONTI ELELMISZERIPARI KUTATO INTEZET, Herman Otto ut 15, H-1022 Budapest (HU)**

(72) Inventor: **Nádai, Béla, Dr. Dipl.-Phys., Rácz Aladár utca 7, H-1121 Budapest (HU)**
Inventor: **Czabaffy, András, Dipl.-Elek., Karinthy Frigyes ut 30-32, H-1111 Budapest (HU)**
Inventor: **Horváth, Loránd, Dr. Dipl.-Elek., Tusnádi utca 45, H-1125 Budapest (HU)**
Inventor: **Kaffka, Károly, Dr. Dipl.-Elek., Abel Jeno utca 20, H-1113 Budapest (HU)**

(74) Representative: **Kern, Wolfgang Dipl.-Ing. et al, Patentanwälte Tischer, Kern & Brehm Albert-Rosshaupter-Strasse 65, D-8000 München 70 (DE)**

(54) Apparatus for providing radiation of controlled spectral composition.

(57) The invention relates to an apparatus for providing radiation of controlled spectral composition, comprising radiation sources (51, ... 5n) each emitting a quasi-monochromatic radiation, a control unit (9) operating the radiation sources (51, ... 5n) corresponding to a predetermined spectral composition, and a dispersing element (1) irradiated by the radiation sources (51, ... 5n) to produce the radiation of the predetermined spectral composition. In a preferred embodiment having no moving parts the radiation sources (51, ... 5n) or outlet ends (71, ... 7n) of fibre optic elements (61, ... 6n) attached to them, the dispersing element (1) e.g. a concave reflecting grating and an exit slit (2) for the radiation produced by the dispersing element (1) are in a fixed position with respect to each other, and the radiation sources (51, ... 5n) or the outlet ends (71, ... 7n) of said fibre optic elements (61, ... 6n) are located with respect to the dispersing element (1) so that they are imaged onto the exit slit (2) via the dispersing element (1). The apparatus may be used as a double monochromator or a radiation synthetizer.

# APPARATUS FOR PROVIDING RADIATION OF CONTROLLED
# SPECTRAL COMPOSITION

The subject matter of the present invention is an apparatus for providing radiation of controlled spectral composition.

## BACKGROUND ART

Apparatus for providing monochromatic radiation have already been well known. Such devices, i.e. monochromators, have been applied e.g. for plotting transmission or reflection spectra of different substances. With one type of these monochromators the monochromatic radiation, the wavelength of which is successively changing as a function of time, is produced from a polychromatic radiation by an optical system comprising a properly moved plan or concave optical grating. However, the so-called monochromatic radiation contains different adverse components in addition to the single wavelength component required, which, when considering spectrophotometric applications for example, deteriorate the accuracy of the measurements. Furthermore, the apparatus known heretofore are not applicable to produce radiation of any predetermined spectral composition.

## DISCLOSURE OF THE INVENTION

The object of the present invention has been to provide an apparatus capable to produce not only a controlled monochromatic radiation but also a radiation of any controlled spectral composition.

Therefore the present invention relates to an apparatus for providing radiation of controlled spectral composition comprising radiation sources each emitting a quasi-monochromatic radiation, a control unit operating the radiation sources corresponding to a predetermined spectral composition, and a dispersing element irradiated by the radiation sources to generate the radiation of the predetermined spectral composition.

In the apparatus according to the invention one or more quasi-monochromatic radiation sources are simultaneously operated by the control unit and a single output beam of radiation is produced from the radiation of this/these source(s) by a dispersing element, preferably a concave reflecting grating, a plane grating or a prism. When only one quasi-monochromatic radiation source is operated at a time, the apparatus is operating as a double monochromator. When two or more quasi-monochromatic radiation sources are operated simultaneously, the apparatus produces a radiation, the spectral composition of which corresponds to the wavelengths of said radiation sources, so it is operating as a radiation synthetizer.

In a preferred embodiment of the apparatus according to the invention the radiation sources or outlet ends of fibre optic elements attached to said radiation sources, the dispersing element and an exit slit for the radiation produced by the dispersing element are in a fixed position with respect to each other, and the radiation sources or the outlet ends of the fibre optic elements are located with respect to the dispersing element so that they are imaged onto the exit slit via the dispersing element. A great advantage of this arrangement is having no moving mechanical parts.

Another embodiment can also be accomplished wherein the selective operation of the quasi-monochromatic radiation sources is combined with the mechanical movement of certain elements of the apparatus. In an embodiment like this the radiation sources or the outlet ends of the fibre optic elements connected to the radiation sources are in a fixed position with respect to each other, the dispersing element and the exit slit for the radiation produced by the dispersing element are also fixed with respect to each other, and the apparatus is provided with a mechanism for moving the radiation sources or the outlet ends of the fibre optic elements on the one hand, and the dispersing element on the other hand with respect to each other. In another possible embodiment the radiation sources or the outlet ends of the fibre optic elements are fixed with respect to each other, and the apparatus is provided with a mechanism for moving the dispersing element and the exit slit for the radiation produced by the dispersing element with respect to each other. In a further embodiment the radiation sources or the outlet ends of the fibre optic elements connected to the radiation sources and the exit slit for the radiation produced by the dispersing element are in a fixed position with respect to each other, and the apparatus is provided with a mechanism for moving the radiation sources or the outlet ends of the fibre optic elements on the one hand, and the dispersing element on the other hand with respect to each other. When considering these embodiments comprising moving parts, the apparatus is preferably provided with a control unit operating the radiation sources one after the other and in synchronism with said moving mechanism.

In the apparatus according to the invention each of said radiation sources may preferably comprise at least one solid-state radiation emitting device. Some of the radiation sources may comprise two or more simultaneously operated solid-state radiation emitting devices with overlapped wavelength ranges, thereby a radiation source of particular wavelength range and intensity can be obtained which otherwise is not available. The solid-state radiation emitting device may be a light-emitting diode or a laser diode, however, the invention is not limited to any particular type of radiation sources. The radiation sources are only required to be quasi-monochromatic, that is the spectrum of each only extends to a relatively narrow band around the nominal frequency and upper harmonics corresponding to the

- 5 -

multiples of the nominal frequency do not considerably exist.

In a further preferred embodiment of the apparatus according to the invention fibre optic elements are connected to the radiation-emitting surfaces of the radiation sources, wherein the outlet ends of said fibre optic elements are of narrow rectangular form. Thereby these narrow outlet ends can be positioned considerably nearer to each other than the radiation sources themselves.

The control unit of the apparatus according to the invention can be accomplished in many different ways. In an apparatus accomplished e.g. as a monochromator the control unit preferably comprises a counter controlled by a clock generator, a decoder connected to an output of the counter, and switching amplifiers, connected to outputs of the decoder, for driving the radiation sources via intensity control devices.

The control unit operating the radiation sources is preferably adapted to a probrammable control of the operational sequence of the radiation sources and/or the intensity and/or the duration of the radiation emitted by the individual radiation sources. This can be effected e.g. by a control unit comprising a programmable data processing unit, a first and a second register connected to output lines of the data processing unit, an analog switching device having an analog input connected to said first register via a digital-to-analog converter and a control input connected to said second register, and amplifiers for driving the radiation sources, said amplifiers being connected to analog outputs of the switching device. With this embodiment the intensity of the successively operated radiation sources as well as the sequence of the operation are programmable, and the program data can be stored in a memory.

In another embodiment providing radiation of optionally programmable spectral composition the control unit comprises a programmable data processing unit and a plurality of signal generators, each of them operating one of the radiation sources periodically for a predetermined time interval, wherein the time interval set inputs of said signal generators are connected to output lines of the data processing unit, and the time interval write inputs are connected to output lines of a decoder controlled by the data processing unit. Thereby two or more of the radiation sources can also be operated simultaneously.

## BRIEF DESCRIPTION OF THE DRAWINGS

The invention will be described in the followings relying on preferred embodiments of the apparatus according to the invention illustrated in the drawings, wherein

FIG. 1 is a schematic drawing of an embodiment comprising a concave reflecting grating,

FIG. 2 represents a schematic drawing of another embodiment comprising a plan reflecting grating,

FIG. 3 is a schematic drawing of a further embodiment comprising a prism,

FIG. 4 represents a schematic drawing of a further embodiment comprising a concave reflecting grating being moved in operation,

FIG. 5 is a schematic perspective view of an embodiment comprising a concave reflecting grating, where the radiation sources are moved in operation,

- 7 -

FIG. 6    is a schematic view of another embodiment comprising a concave reflecting grating being moved in
           operation,

FIGS. 7 and 8    illustrate two possible lay-outs and
           accomplishments, respectivel, of the fibre optic
           elements connected to the radiation sources of an
           apparatus according to the invention, and

FIGS. 9 to 11    illustrate different embodiments of the
           control unit applied in an apparatus according to
           the invention.


MODES OF CARRYING OUT THE INVENTION

The same elements or those of the same function are
denoted with the same reference signs throughout the drawings.

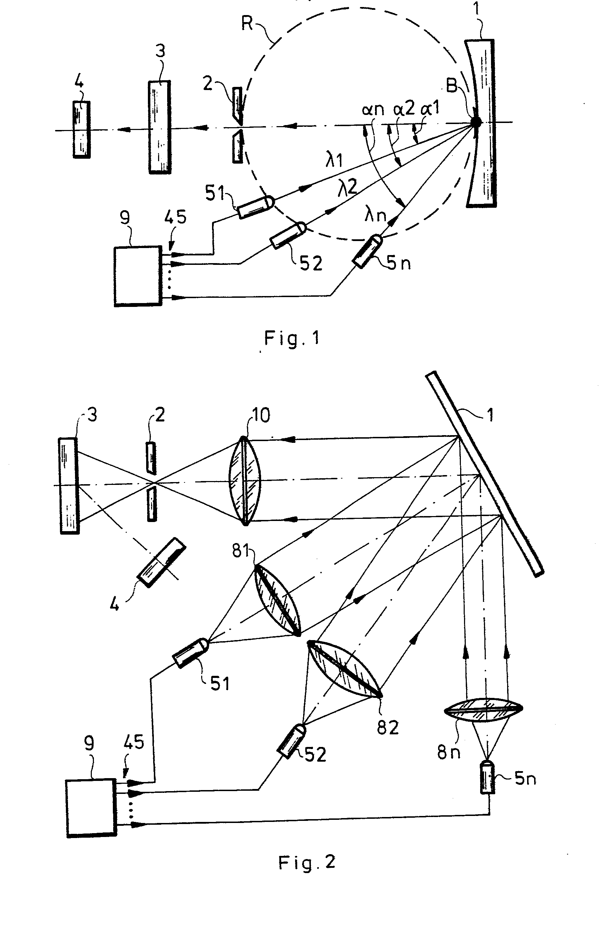

In Fig. 1 the dispersing element 1 is a per se known concave reflecting grating having a related Rowland-circle R. The
radiation sources 51, 52, ... 5n as well as the exit slit 2
(opening) are located along the Rowland-circle R. The radiation
sources 51, 52, ... 5n emit quasi-monochromatic radiation beams
towards point B (vertex) of the dispersing element 1. The monochromatic beam reflected by the dispersing element 1 and passing
through the exit slit 2 falls upon a sample 3 to be measured,
and the radiation transmitted by the sample 3 is measured by a
radiation detector 4. The radiation sources 51, 52, ... 5n are
operated by a control unit 9 via lines 45.

The radiation sources 51, 52, ... 5n emit radiation in a
narrow wavelength range around $\lambda 1$, $\lambda 2$, ... $\lambda n$, and the radiation
emitting surface of each one is located along the Rowland-circle
R at a sutiable position so that the monochromatic beam reflected by the dispersing element 1 being irradiated by said quasi-monochromatic beam just passes through the exit slit 2 corresponding to the general grating-equation:

$$\sin\alpha + \sin\beta = \frac{k \cdot \lambda}{a} . \qquad (1)$$

In equation (1) $\alpha$ is the angle included by the incident radiation
beam emitted by the radiation sources 51, 52, ... 5n and the
normal to the grating, $\beta$ is the angle included by the radiation
beam of wavelength $\lambda$ reflected by the grating toward the exit
slit 2 and the normal to the grating, $a$ is the spacing between
the grooves on the grating and $k$ is a positive integer referring
to the order of the diffraction. In the embodiment illustrated
$\beta = 0$, and the angles $\alpha1$, $\alpha2$, ... $\alpha n$ are given by equation (1)
substituting the values of $\lambda1$, $\lambda2$, ... $\lambda n$, respectively.

When only one of the radiation sources 51, 52, ... 5n is
operated by the control unit 9 at a time, the apparatus forms a
double monochromator. That is to say, the grating as a dispersing
element 1 produces a radiation beam, e.g. with a nominal wave-
length of $\lambda1$, being monochromatic to a greater extent than the
quasi-monochromatic radiation beam emitted by the radiation
source 51. However, by an appropriate operation of the control
unit 9 a radiation of predetermined spectral composition can also
be produced in the exit slit 2. In this case the required ones
of the radiation sources 51, 52, ... 5n are operated simultaneously
by the control unit 9 and so the apparatus can be utilized as a
radiation synthetizer.

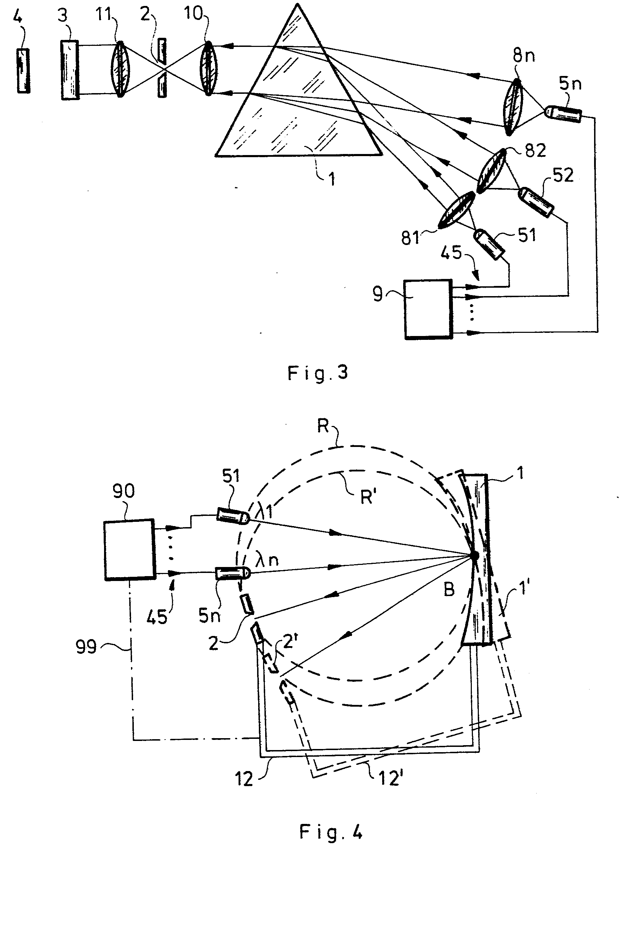

In the present description the term "dispersing element"
refers to an element wherein the relation between the angle of incidence and the angle of departure of the radiation beams is depending on the wavelength. In Fig. 1 the dispersing element 1 is a concave reflecting grating, in Figs. 2 and 3 other types of the dispersing element 1 are illustrated.

In an apparatus corresponding to the present invention the radiation produced may be an electromagnetic radiation from the region of ultra-violet rays ($\lambda$ = 100 nm) to the infra-red region ($\lambda$ = 30 000 nm). In the region of the visible light ($\lambda$ = 380 to 800 nm) the apparatus can also be applied as a colour-synthetizer.

An embodiment similar to that of Fig. 1 is illustrated in Fig. 2, wherein the dispersing element 1 is a per se known plan reflecting grating, and therefore 81, 82, ... 8n lenses are attached to the radiation sources 51, 52, ... 5n, and a lens 10 focuses the beam reflected by the plan grating onto the exit slit 2. The beam of radiation passing through the exit slit 2 falls on the sample 3 and the radiation reflected by the sample 3 is measured by the radiation detector 4. The radiation sources 51, 52, ... 5n as well as the related lenses 81, 82, ... 8n shall be located corresponding to the grating-equation relating to the plan reflecting grating.

An embodiment similar to that of Fig. 2 is shown in Fig. 3 wherein the dispersing element 1 is a prism. The beam of radiation passing through the exit slit 2 is directed to the sample 3 by a lens 11, and the radiation transmitted by the sample 3 is measured by the radiation detector 4.

The apparatuses illustrated in Figs. 1 to 3 can be very advantageously utilized as a double monochromator, wherein a very small dissipation can be attained by the pulsed operation of the radiation sources 51, 52, ... 5n. When applying as a radiation synthetizer the required radiation sources should only be operated at the same time.

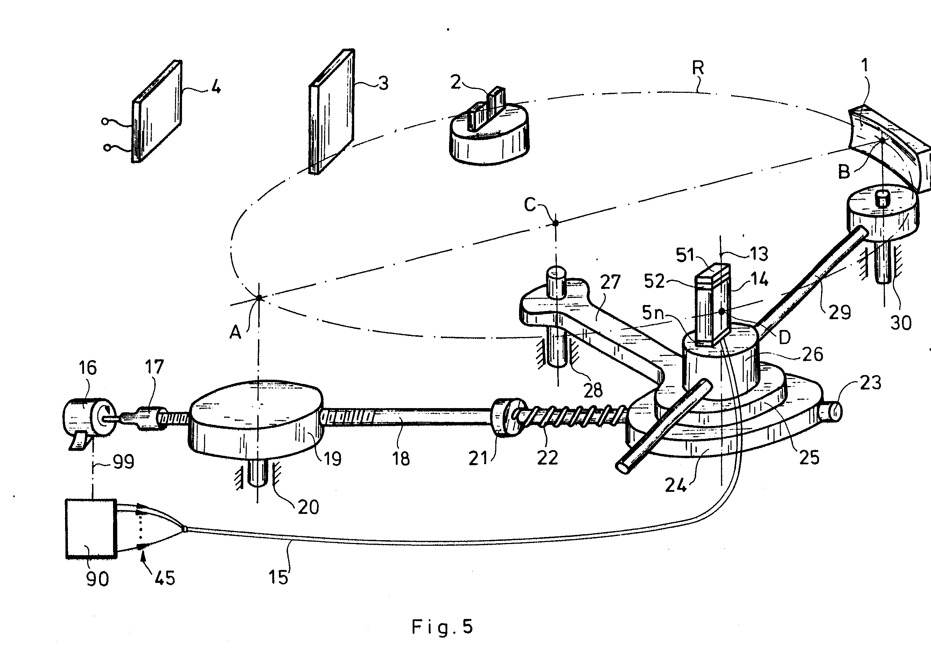

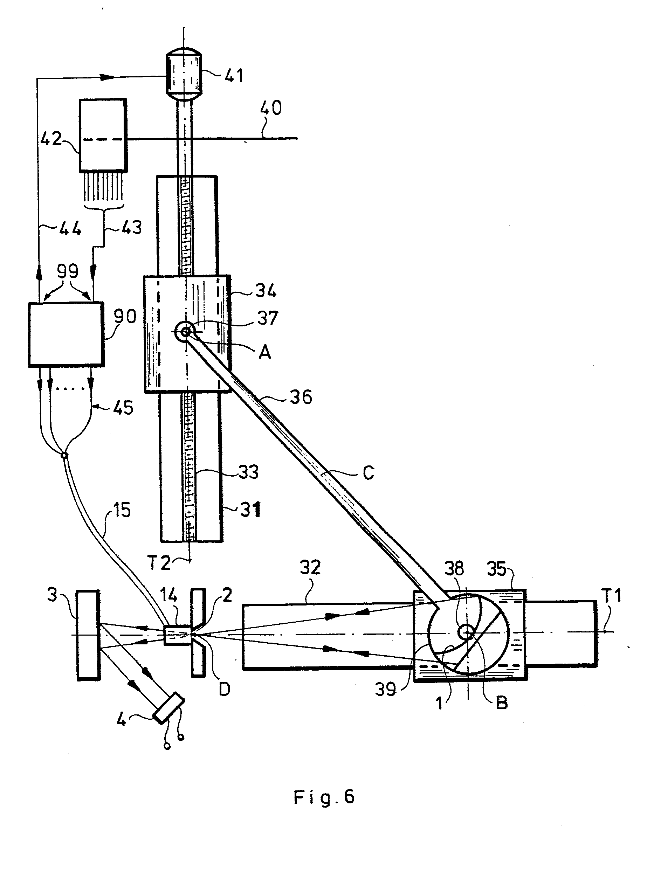

In the embodiment illustrated in Fig. 4 the radiation sources 51, ... 5n are fixed and the dispersing element 1 consisting of a concave reflecting grating is to be rotated around a shaft positioned at point B. The exit slit 2 is mounted to the dispersing element 1 e.g. by means of a holder 12. The exit slit 2 is to be positioned along the Rowland-circle R of the grating. When rotating the grating the related Rowland-circle R and the exit slit 2 will also be rotated. The dispersing element 1 drawn with continuous lines in Fig. 4 is shown in a position when the radiation source 51 is operated by the control unit 90, the radiation-emitting surface of the radiation source 51 being positioned along the Rowland-circle R. The lay-out is selected geometrically according to the general grating-equation (1) corresponding to a wavelength $\lambda 1$. When another one of said radiation sources is operated by the control unit 90, the dispersing element 1 together with the exit slit 2 is to be rotated so that the general grating-equation (1) is fulfilled for the wavelength in question. The rotated position corresponding to the operation of the radiation source 5n is illustrated in Fig. 4 by the dispersing element 1', the Rowland-circle R', the holder 12' and the exit slit 2'. The radiation source 5n is fixed so that its radiation emitting surface is positioned along the Rowland-circle R' and the emitted quasi-monochromatic radiation is directed to the point B. With this system the operation of the radiation sources 51, ... 5n and the mechanism for moving the dispersing element 1 have to be synchronized. This is symbolically represented by an interconnection 99 between the control unit 90 and

the holder 12. An accomplishment of this synchronization is shown in more detail in Figs. 5 and 6.

The dispersing element 1 of the apparatus shown in Fig. 5 is a fixed concave reflecting grating and the exit slit 2 is fixed permanently along the Rowland-circle R of said grating. A holder 14 comprising the radiation sources 51, 52, ... 5n is moved along the Rowland-circle R. The radiation-emitting surfaces of the radiation sources 51, 52, ... 5n are located along a line 13 one under the other. The lines 45 operating the radiation sources 51, 52, ... 5n are joined in a calbe 15 and connected to outputs of the control unit 90.

The holder 14 is mounted to a holding member 26, and the beam of radiation emitted by the radiation source being just operated from between the radiation sources 51, 52, ... 5n is reflected by the dispersing element 1 onto the exit slit 2 as a monochromatic beam of radiation which, after passing through the exit slit 2 falls on the sample 3 to be measured, and the radiation transmitted by the sample 3 is measured by the radiation detector 4. The holding member 26 is rotatably mounted to an end portion 25 of a distance element 27, and its orientation is determined by a rod 29 fitted in a through hole provided in the holding member 26. The rod 29 is supported in a bearing 30 at a point B corresponding to the center (vertex) of the grating constituting the dispersing element 1. The distance element 27 is supported in a bearing 28 at a point C corresponding to the center of the Rowland-circle R. The end portion 25 and thereby the holding member 26 is driven by rotating a threaded shaft 18 passing through a support member 24. The threaded portion of the shaft 18 is driven in a threaded member 19 supported in a bearing

- 12 -

20 at a point A of the Rowland-circle R just opposite to the point B, and is rotated by a fixed motor 16, e.g. a stepper motor, preferably via a flexible coupling 17. The shaft 18 is provided with a larger diameter end portion 23 to stop the support member 24, this latter being pressed by a spring 22 supported by a collar 21 mounted on the shaft 18. The end portion 25 of the distance element 27 is provided e.g. with two pins protruding upwards and downward, respectively, fitted in holes provided in the holding member 26 and the support member 24, respectively, wherein said holes do not reach the transverse holes provided for the rod 29 and the threaded shaft 18, respectively.

It can be seen in Fig. 5 that while rotating the shaft 18 the radiation sources 51, 52, ... 5n will always move along the Rowland-circle R with respect to the fixed reflecting grating applied as a dispersing element 1 and the fixed exit slit 2 so that said radiation sources 51, 52, ... 5n radiate always toward the point B. The apparatus according to Fig. 5 can also be arranged so that both the radiation sources 51, 52, ... 5n and the exit slit 2 are located on the holding member 26 in a Littrow-arrangement, or else the exit slit 2 is located on the holding member 26 and the radiation sources 51, 52, ... 5n are fixed with respect to the dispersing element 1. In these latter cases the sample 3 and the radiation detector 4 shall also be mounted on the moving holding member 26.

In Fig. 5 the control unit 90 provides for the synchronous operation of the moving mechanism and the radiation sources 51, 52, ... 5n, the interconnection 99 between the control unit 90 and the stepper motor 16 is illustrated schematically, only. In the course of the motion always that one of the radiation sources 51, 52, ... 5n has to be operated, the wavelength of which makes it possible for the monochromatic beam of radiation reflected by the dispersing element 1 to pass through the exit slit 2.

With the apparatus illustrated in Fig. 6 the exit slit 2 and the holder 14 comprising the radiation sources are fixed in a Littrow-arrangement (one under the other in the drawing). A beam of radiation is emitted by the radiation sources positioned one above the other and mounted in the holder 14 placed e.g. above the surface of the paper. This beam of radiation reaches the dispersing element 1 comprised of a concave reflecting grating, the center point B of which is positioned in the surface of the paper, and a beam of radiation with a wavelength corresponding to the angular position of the grating is reflected to the sample 3 through the exit slit 2 placed under the surface of the paper. The radiation scattered by the sample 3 is detected by the radiation detector 4.

The lines 45 operating the radiation sources mounted in the holder 14, with their radiation emitting surfaces being placed in a line one under the other, are joined in a cable 15 and connected to the outputs of the control unit 90.

In the embodiment illustrated in Fig. 6, two e.g. prismatic slide-ways 31 and 32 are also mounted in a fixed position with respect to the holder 14 and the exit slit 2. A member 35 is guided by the slide-way 32 free of play along an axis T1 lying in a plane corresponding to the radiation sources and the exit slit 2, whereas a member 34 is also guided free of play by the slide-way 31 along an axis T2 being perpendicular to the axis T1 and lying in the plane of the exit slit 2.

A holding member 39 formed at one end of a distance element 36 and carrying the dispersing element 1 consisting of a concave reflecting grating is rotatably supported on a pivot 38 mounted to the sliding member 35. The center point of the grating coincides with the axis T1. The other end of the distance element 36 is pivotedly connected to the sliding member 34 by means of a pivot 37. The pivots 37 and 38 are perpendicular to the common plane of the slide-ways 31 and 32, and intersect the axes T2 and T1, respectively. The length of the distance element 36, i.e. the distance between the pivots 37 and 38, is equal to the diameter of the Rowland-circle related to the concave reflecting grating. The mechanism is moved by means of a threaded shaft 33 fitted in a threaded hole provided in the member 34, driven e.g. by a motor 41, but it can also be rotated manually, while the member 35 is freely sliding on the slide-way 32.

A code disc 40 is mounted to the shaft 33, forming a part of a digital angular position transducer 42 per se known. When the code disc 40 is rotating an electronic digital signal appears on the parallel output of the angular position transducer 42 corresponding to the actual angular position. This parallel output is connected to an input of the control unit 90 via line 43. The control unit 90 being properly programmed synchronizes the moving mechanism to the operation of the radiation sources partly by the proper control of the motor 41 e.g. a stepper motor via line 44 and partly by driving the lines 45 operating the radiation sources. The interconnection 99 between the control unit 90 and the moving mechanism is provided by lines 43 and 44.

It can be seen, that with the embodiment according to Fig 6, point A corresponding to the pivot 37, point B corresponding to the pivot 38, as well as point D corresponding both to the radiation emitting surfaces of the radiation sources located one under the other and to the exit slit 2 are always lying along a Thales-circle, this Thales-circle being at the same time the Rowland-circle of the concave reflecting grating.

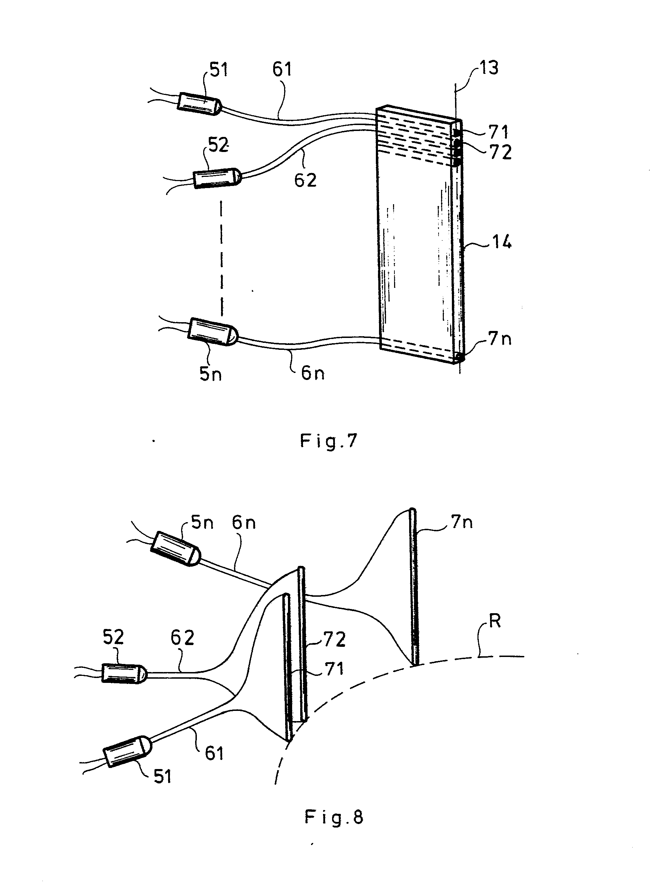

In Fig. 7 fibre optic elements 61, 62, ... 6n per se known are attached to the radiation emitting surfaces of the radiation sources 51, 52, ... 5n, the outlet ends 71, 72, ... 7n of the former ones are joined in a holder 14 and arranged along a line 13. This arrangement can preferably be applied in the embodiments illustrated in Figs. 5 and 6. Thereby the outlet ends 71, 72, ... 7n can be placed more densely and in a smaller area than the radiation sources 51, 52, ... 5n themselves.

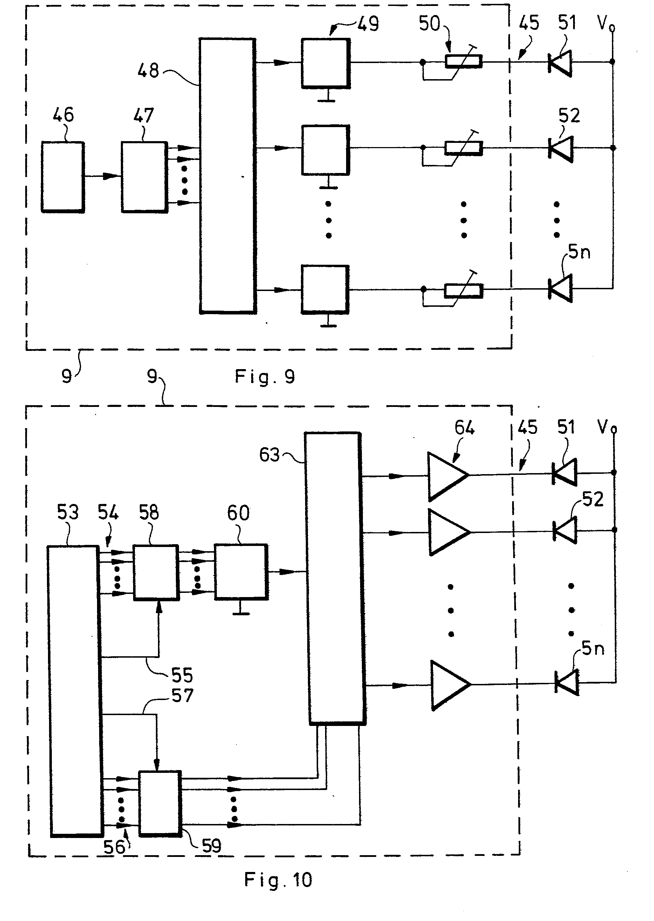

In Fig. 8 fibre optic elements 61, 62, ... 6n are attached to the radiation emitting surfaces of the radiation sources 51, 52, ... 5n, the outlet ends 71, 72, ... 7n of the former ones are formed as narrow rectangles. Thereby the outlet ends 71, 72, ... 7n can be placed along the Rowland-circle R very close to each other and this may be very advantageous in the cas of the embodiments illustrated in Figs. 1 to 4.

In Fig. 9 an embodiment of the control unit 9 provided for the apparatus according to the invention is illustrated, which operates the radiation sources 51, 52, ... 5n, illustrated in Fig. 9 as LEDs or laser diodes, in a proper sequence one after the other. Suitable laser diodes have been described e.g. in the periodical "Laser Focus", March 1982, pp. 61-66. One terminals of said radiation sources 51, 52, ... 5n are conneted to a supply voltage V, while the other terminals are connected to outputs of

- 16 -

switching amplifiers 49 via intensity adjusting devices, e.g.
adjustable potentiometers 50. The differences in the intensity of
the radiation existing between the radiation sources 51, 52, ...
5n powered with the same supply current can be compensated with
the potentiometers 50, or else intensity differences can be
adjusted as required. The switching amplifiers 49 are controlled
by outputs of a decoder 48, wherein only one of the switching
amplifiers 49 is controlled at a time by said decoder 48, corresponding to the signal provided on a parallel output of a
counter 47. The counter 47 is driven by a clock generator 46.
As it can be seen, the radiation sources 51, 52, ... 5n are
operated periodically one after the other, the radiation source
51 will succeed again after the radiation source 5n.

Another embodiment of the control unit 9 can be seen in
Fig. 10, which is also applicable to operate only one of the
radiation sources 51, 52, ... 5n, but the sequence of their
operation is optionally programmable. One terminals of the radiation sources 51, 52, ... 5n are connected to the supply
voltage V, while the other terminals are connected to analog
outputs of an analog switching device 63 via amplifiers 64. The
switching device 63 has a single analog input, and that one of
the analog outputs is just connected to said analog input, the
address of which is applied to an addressing input from a register 59. The analog input is fed from the output of a digital-
-to-analog converter 60, the digital input of which is connected
to an output of another register 58. The data inputs of the
registers 58 and 59 are connected to outputs of a data processing
unit 53 via parallel data lines 54 and 56, respectively, while
their write inputs are also connected to the data processing unit 53 via lines 55 and 57, respectively. The data processing unit 53 can preferably be realized with a microprocessor.

The actual address of that one of the radiation detectors 51, 52, ... 5n which is to be operated is provided by the data processing unit 53 on the parallel lines 56, while the coded signal corresponding to the intensity of the radiation to be emitted is provided on the parallel lines 54, thereafter a write signal is provided on each of the lines 55 and 57. This results in appearing an analog signal on the output of the digital-to--analog converter 60 corresponding to the intensity required, which is applied to the input of the amplifier 64 corresponding to the addressed radiation source via the analog switching device 63, and thereby the addressed radiation source will radiate with the adjusted intensity until new intensity and address signals will be provided by the data processing unit 53.

The radiation sources 51, 52, ... 5n may be addressed periodically one after the other so that the radiation source 51 will succeed the radiation source 5n, yet the order may be quite optional, and even the duration of the radiating period of each radiation source may be different of each other.

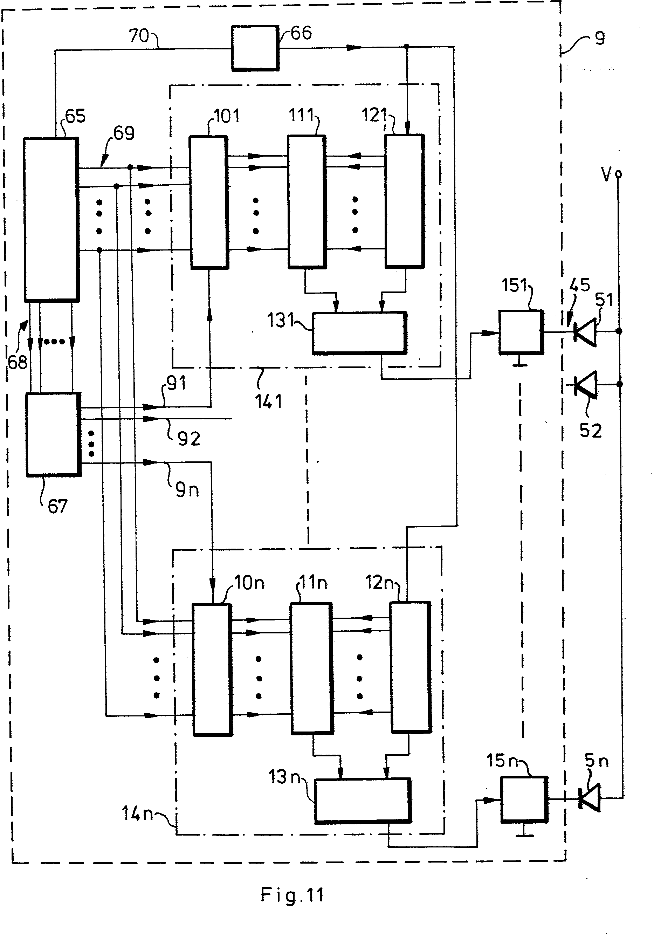

A further emobdiment of the control unit 9 is shown in Fig. 11, whereby the radiation sources 51, 52, ... 5n can be operated in any sequence and in any combination. One terminal of the radiation source 51 is connected to a supply voltage V, while its other terminal is connected to the output of a switching amplifier 151, the control input of which being connected to the output of a signal generator 141 specifying the operation of the radiation source 51. The signal generator 141 is comprised of a register 101 and a counter 121, as well as a digital comparator 111 connected to the data outputs of the register 101 and the counter 121. The counter 121 incremented by clock signals provided by a clock generator 66 applies a signal upon its zero-transitions to the set input of a flip-flop 131, thereby a signal will appear on the output of the flip-flop 131 controlling the switching amplifier 151. A digital signal appearing on output lines 69 of a data processing unit 65, preferably a microprocessor, is written into the register 101 upon a write signal appearing on an output line 91 of a decoder 67. When the content of the counter 121 incremented by the clock signals equals with the digital signal written in the register 101, a signal will be applied from the output of the comparator 111 to the reset input of the flip-flop 131, whereupon the signal on the output of the flip-flop 131 stops to exist. So it can be seen, that the radiation source 51 will be operated periodically with a cycle time corresponding to the counting period of the counter 121 and during a certain part of this period specified by the content of the register 101. The decoder 67 is connected to output lines 68 of the data processing unit 65, and a signal will be provided on that one of the output lines 91, 92, ... 9n, which is assigned by a digital signal received on lines 68. The clock generator 66 receives a timing signal from the data processing unit 65 via line 70.

Similar operating circuits are rendered to each of the radiation sources 51, 52, ... 5n. Thus the radiation source 5n illustrated is provided with a switching amplifier 15n and a signal generator 14n comprising a register 10n, a counter 12n, a comparator 11n and a flip-flop 13n. The counter 12n is also connected to the output of the common clock generator 66, the data input of the register 10n is connected to the lines 69 while its write input to the line 9n.

It can be seen from the construction, that upon the effect of the clock pulses provided be the clock generator 66, each signal generator 141, ... 14n will apply an operating signal to the proper switching amplifier 151, ... 15n the duration of which is corresponding to the digital signal written in the proper register 101, ... 10n.

The apparatus according to the present invention can however be accomplished differently from the embodiments illustrated. E.g. some radiation sources may consist of two solid-state light-emitting diodes connected parallel. Thereby such a quasi-monochromatic characteristics of the radiation source can be realized with which the frequency corresponding to the highest intensity lies somewhere between the frequency values pertaining to the highes intensity of the two diodes each. Some successive radiation sources may also be of the same frequency characteristics, that is of the same type of diode, if the quasi-monochromatic character of the diodes in question is broad enough to provide sufficient intensity at several successive frequency values.

The fix arrangement of Fig. 1 may be combined with the moving mechanism illustrated in one of Figs. 4 to 6. Thereby such a double-monochromator can be obtained, wherein the number of the required radiation sources is smaller than the number $\underline{n}$ of the frequency values, as two or more monochromatic radiations having different frequencies can be produced from the quasi-monochromatic radiation of a single radiation source by making slight displacements by the moving mechanism of Figs. 4 to 6.

- 20 -

CLAIMS

1. An apparatus for providing radiation of controlled spectral composition, characterized by comprising radiation sources (51, 52, ... 5n) each emitting a quasi-monochromatic radiation, a control unit (9, 90) operating the radiation sources (51, 52, ... 5n) corresponding to a predetermined spectral composition, and a dispersing element (1) irradiated by the radiation sources (51, 52, ... 5n) to produce the radiation of the predetermined spectral composition.

2. The apparatus according to claim 1, characterized in that the radiation sources (51, 52, ... 5n) or outlet ends (71, 72, ... 7n) of fibre optic elements (61, 62, ... 6n) attached to the radiation sources (51, 52, ... 5n), the dispersing element (1) and an exit slit (2) for the radiation produced by the dispersing element (1) are in a fixed position with respect to each other, and the radiation sources (51, 52, ... 5n) or the outlet ends (71, 72, ... 7n) of the fibre optic elements (61, 62, ... 6n) are located with respect to the dispersing element (1) so that they are imaged onto the exit slit (2) via the dispersing element (1).

3. The apparatus according to claim 1, characterized in that the radiation sources (51, ... 5n) or outlet ends (71, ... 7n) of fibre optic elements (61, ... 5n) attached to the radiation sources (51, ... 5n) are in a fixed position with respect to each other, the dispersing element (1) and an exit slit (2) for the radiation produced by the dispersing element (1) are also in a fixed position with respect to each other, and the apparatus is provided with a mechanism for moving the radiation sources (51, ... 5n) or the outlet ends (71, ... 7n) of the fibre optic elements (61, ... 6n) and the dispersing element (1) with respect to each other.

4. The apparatus according to claim 1, characterized in that the radiation sources (51, ... 5n) or outlet ends (71, ... 7n) of fibre optic elements (61, ... 6n) attached to the radiation sources (51, ... 5n) are in a fixed position with respect to the dispersing element (1), and the apparatus is provided with a mechanism for moving the dispersing element (1) and an exit slig (2) for the radiation produced by the dispersing element (1) with respect to each other.

5. The apparatus according to claim 1, characterized in that the radiation sources (51, ... 5n) or outlet ends of fibre optic elements (61, ... 6n) attached to the radiation sources (51, ... 5n) and an exit slit (2) for the radiation produced by the dispersing element (1) are in a fixed position with respect to each other, and the apparatus is provided with a mechanism for moving the radiation sources (51, ... 5n) or the outlet ends (71, ... 7n) of the fibre optic elements (61, ... 6n) and said dispersing element (1) with respect to each other.

6. The apparatus according to any of claims 3 to 5, characterized in that the radiation emitting surfaces of all radiation sources (51, ... 5n) or the outlet ends (71, ... 7n) of the fibre optic elements (61, ... 6n) attached to said surfaces are arranged along a line (13) or along an optical image of a line (13) to irradiate the dispersing element (1).

7. The apparatus according to any of claims 3 to 6, characterized by comprising a control unit (90) to operate the radiation sources (51, ... 5n) one after the other and in synchronism with said moving mechanism.

8. The apparatus according to any of claims 1 to 7, characterized in that the dispersing element (1) is a concave reflecting grating or a plan grating or a prism.

9. The apparatus according to claim 2, characterized in that the dispersing element (1) is a concave reflecting grating, and both the exit slit (2) and the radiation emitting surfaces of the radiation sources (51, ... 5n) or the outlet ends (71, ... 7n) of the fibre optic elements (61, ... 6n) are positioned along the Rowland-circle (R) of the concave reflecting grating.

10. The apparatus according to any of claims 1 to 9, characterized in that each of the radiation sources (51, ... 5n) comprises at least one solid-state radiation emitting device.

11. The apparatus according to claim 10, characterized in that some of the radiation sources (51, ... 5n) comprise two or more simultaneously operated solid-state radiation emitting devices with overlapped wavelength ranges.

12. The apparatus according to claim 10, characterized in that some of the radiation sources (51, ... 5n) corresponding to successive wavelength values comprise solid-state radiation emitting devices of the same wavelength range.

13. The apparatus according to any of claims 10 to 12, characterized in that the solid-state radiation emitting devices are light-emitting diodes or laser diodes.

14. The apparatus according to any of claims 1 to 13, characterized in that fibre optic elements (61, ... 6n) are attached to the radiation emitting surfaces of the radiation sources (51, ... 5n), said fibre optic elements (61, ... 6n) having outlet ends (71, ... 7n) with a narrow rectangular form.

15. The apparatus according to any of claims 1 to 14, characterized in that the control unit (9) comprises a counter (47) controlled by a clock generator (46), a decoder (48) connected to an output of the counter (47), and switching amplifiers (49), connected to outputs of the decoder (48), for driving the radiation sources (51, ... 5n) via intensity control devices.

16. The apparatus according to any of claims 1 to 14, characterized in that the control unit (9) operating the radiation sources (51, ... 5n) is adapted to a programmable controlle of the operational sequence of the radiation sources (51, ... 5n) and/or the intensity and/or the duration of the radiation emitted by the radiation sources (51, ... 5n).

17. The apparatus according to claim 16, characterized in that the control unit (9) comprises a programmable data processing unit (53), a first and a second register (58, 59) connected to output lines (54,55,56,57) of the data processing unit (53), an analog switching device (63) having an analog input connected to said first register (58) via a digital-to-analog converter (60) and a control input connected to said second register (59), and amplifiers (64) connected to analog outputs of the switching device (63) for driving the radiation sources (51, ... 5n).

18. The apparatus according to claim 16, characterized in that the control unit (9) comprises a programmable data processing unit (65) and a plurality of signal generators (141, ... 14n), each of them operating one of the radiation sources (51, ... 5n) periodically and for a predetermined period, the time period control inputs of the signal generators (141, ... 14n) being connected to output lines (69) of the data processing unit (65), while the time period write inputs of the signal ge-

- 24 -

nerators (141, ... 14n) being connected to output lines (91, ... 9n) of a decoder (67) controlled by the data processing unit (65).

19. The apparatus according to claim 18, characterized in that each signal generator (141, ... 14n) comprises a counter (121, ... 12n) driven by a common clock generator (66), a register (101, ... 10n) connected to said output lines (69) of the data processing unit (65), a digital comparator (111, ... 11n) connected to parallel data outputs of both said counter (121, ... 12n) and said register (101, ... 10n), and a flip-flop (131, ... 13n) connected to an overflow output of said counter (121, ... 12n) on the one hand, and to an output of said digital comparator (111, ... 11n) on the other hand, an output of said flip-flop (131, ... 13n) representing the output of said signal generator (141, ... 14n).


(7 drawings, 11 figures)

Fig. 1

Fig. 2

2|7

Fig.3

Fig.4

Fig.5

Fig.6

Fig.7

Fig.8

6/7

Fig. 9

Fig. 10

7/7

Fig.11